# EUROPEAN PATENT APPLICATION

(11) **EP 1 270 332 A2**
(43) Date of publication of application: **02.01.2003**
(21) Application number: 01310216.5
(22) Date of filing: 06.12.2001
(51) Int. Cl.: B60Q 5/00

(54) **Membrane switch for floater modules**

(30) Priority: 22.06.2001 US 887633
(71) Applicant: The Bergquist Company, Chanhassen, Minnesota 55317 (US)
(72) Inventor: Hotvet, Dean, Excelsior, Minnesota 55331 (US); Behrens, Darrin, Prior Lake, Minnesota 55372 (US)
(74) Representative: Charig, Raymond Julian

(57) **Abstract**

An electrical membrane switch assembly (20) for actuating electrical devices, the membrane switch assembly including first and second flexible membrane layers (62,82) in generally opposing relationship to one another, with respective adjacent and spaced apart surfaces of the first and second layers (62,82) having electrically conductive material (64,84) thereon, the respective conductive material (64,84) being in face-to-face and spaced apart relationship at one or more distinct switch locations. In a particular embodiment, the membrane switch assembly (20) is adapted for use in a vehicular steering wheel apparatus (10) for actuating one ore more remote electrical devices upon imposition of an inward pressure at specific portions of the steering wheel (12) face, the assembly being sized and configured to operably mount to a rear perimeter portion of a floating steering wheel module (30).

## Description

### Field of the Invention

The present invention relates to compact and flexible electrical switches generally, and more particularly to flexible electrical membranes which are for use in pressure-sensitive applications such as vehicular horns which are actuated by electrical switches incorporated into floating steering wheel modules.

### Background of the Invention

A variety of electrical switches have been proposed and utilized in compact pressure-sensitive applications in which the imposition of force or pressure on the electrical switch correspondingly actuates such switch to thereby complete an associated circuit. A particular configuration useful in such pressure-sensitive applications is a relatively thin membrane switch apparatus. Such a membrane switch apparatus may be utilized in applications requiring relatively small dimensions and for relatively small pressure requirements for actuating the switch.

One particular application in which such membrane switches are particularly useful is in the actuation of remote electrical devices from a vehicular steering wheel assembly, such as audible horns. In most cases, warning horns are located remotely from the vehicle steering wheel, and are remotely controlled and actuated from the steering wheel. A variety of switch mechanisms for actuating the remote horn have been utilized within the steering wheel bodies. Such switch mechanisms include, for example, metal contact points mounted on a rear side of a floating module positioned at a central location of the steering wheel, electrical contacts integrated into the supporting springs of the floating modules, and flexible metallic spring-like contact supports in the respective steering wheel assembly. These switches are typically provided at a generally center portion of the steering wheel for accessibility thereto by an operator.

More recently, plastic film-based flexible switch mechanisms and/or contacts have been utilized in such steering wheel applications for responding to pressure exerted upon a center portion of the steering wheel mechanism to actuate the remote horn. These plastic film switch designs tend to be more responsive to a reduced level of pressure on the floating module of the steering wheel for actuation of the remote horn. Such plastic film-based switches generally operate by being disposed between a fixed portion of the steering wheel and the floating module of the steering wheel, whereby pressure on the floating module causes the switch mechanism to compress and thereby create electrical contact between normally spaced apart conductive materials. In such a manner, a complete circuit is created during the time in which the floating module is depressed, which corresponds to the time in which the remote horn is actuated.

Recently, steering wheels in automobiles have been required to accommodate inflatable airbags for safety restraint of automobile passengers in the event of a collision of sufficient force. Most typically, the airbag is stored between the fixed steering wheel and the floating module secured thereto. The floating module is often times positioned at a center location of the steering wheel for preferred inflation of the inflatable airbag.

To accommodate the preferred positioning of the inflatable airbag, manufacturers have incorporated flexible plastic film switches between the inflatable airbag and a front cover of the floating module. A difficulty introduced by such a configuration is providing an effective switch across the resilient surface comprising the airbag assembly. Such a difficulty is introduced because the airbag assembly must not be substantially impeded when inflation is necessary. Accordingly, the switch must be capable of providing a good electrical closure under a relatively small amount of pressure, while not impeding inflation of the airbag assembly.

It is therefore a principle object of the present invention to provide an electrical membrane switch assembly that is sized and configured to fit in a floating module portion of a vehicular steering wheel apparatus.

It is a further object of the present invention to provide an electrical membrane switch assembly for use in a vehicular steering wheel apparatus for actuating remote electrical devices, wherein the membrane switch assembly is outside the path of inflation of an associated inflatable airbag.

It is another object of the present invention to provide an electrical membrane switch assembly for use in a vehicular steering wheel apparatus for actuating remote electrical devices, wherein the membrane switch assembly includes one or more locations for completing a circuit and thereby actuating the remote device.

It is a still further object of the present invention to provide a membrane switch assembly for use in a vehicular steering apparatus for actuating remote electrical devices, wherein the membrane switch assembly is sized and configured to fit in a recess of a rear side of the floating module of the associated steering wheel apparatus.

It is another object of the present invention to provide an electrical membrane switch assembly wherein all switch elements are encased and electrically isolated within the unitary structure of the membrane switch assembly.

It is a still further object of the present invention to provide an electrical membrane switch assembly having internal pressure absorption means including gas relief zones which are sized and configured for accepting gas forced from between respective membrane layers.

### Summary of the Invention

By means of the present invention, an improved electrical membrane switch assembly is provided for desired applications in which a thin and unobtrusive switch assembly is preferred. Such an improved membrane switch assembly is obtained by utilizing distinct thin membrane layers in combination and being superimposed over one another but spaced apart from one another at portions where such distinct membrane layers have electrically conductive material disposed in face-to-face relationship. The membrane switch assembly is therefore actuated when inward pressure exerted upon the membrane layers causes the spaced apart electrically conductive material on respective membrane layers to come into electrical contact. The membrane switch assembly of the present invention utilizes a configuration by which electrical contact between distinct membrane layers at one location completes the entire circuit, thereby actuating an electrical device operably coupled thereto.

The membrane switch assembly of the present invention utilizes a configuration in which the switch assembly may be conveniently placed in a rear face of a floating module in a steering wheel assembly for operably actuating remote electrical devices such as a horn. The switch assembly is preferably substantially u-shaped in configuration and positioned around or behind a stored airbag, thereby avoiding interference with airbag deployment through the front of the steering wheel assembly. The membrane switch assembly of the present invention is further sized and configured to provide one or more locations at which electrical contact between distinct membrane layers may be achieved, thereby completing the corresponding circuit.

One embodiment of the membrane switch assembly is configured for use in a vehicular steering wheel apparatus for actuating a remote horn, wherein the membrane switch assembly includes first and second flexible membrane layers in generally opposing relationship to one another, with respective adjacent and spaced apart surfaces of the first and second membrane layers having electrically conductive material thereon. The conductive material is preferably electrically coupled to the remote horn, with the conductive material on the first membrane layer being in face-to-face and spaced apart relationship with the second membrane layer conductive material at one or more distinct switch locations. The membrane switch assembly preferably further includes pressure absorption means disposed on at least one of the first and second membrane layers for providing internal gas pressure relief when opposing membrane layers are compressed together. In operation, sufficient inward pressure on the second membrane layer 82 causes the conductive material on respective membrane layers to come into electrical contact with one another, thereby completing a circuit between respective conductive material layers for the duration of such inward pressure.

In preferred embodiments of the invention, the membrane switch assembly includes a layer of dielectric material disposed between the first and second membrane layers at portions of the distinct switch locations. Preferably, at least three switch locations are provided in the membrane switch assembly of the present invention, though some embodiments may include one or more of such switch locations. The pressure absorption means preferably comprises gas relief zones which are sized and configured for accepting gas forced from between the membrane surfaces upon imposition of inward pressure. The membrane switch assembly of the present invention is also preferably configured to operably fit into a rear portion of a floating steering wheel module in a substantially u-shaped orientation.

Another embodiment of the membrane switch assembly includes a pair of spaced-apart flexible membrane layers in generally opposing relationship with one another, with each of the membrane layers having electrically conductive conduits disposed on respective inner surfaces thereof. The membrane layers are preferably operably spaced apart by dielectric material positioned at desired intervals between the membrane layers such that the opposing electrically conductive conduits are temporarily and operably placed into electrical contact with one another through the application of inward force at specific locations of the switch assembly, thereby completing a circuit between the conductive conduits of the first and second membrane layers.

### Brief Description of the Drawings

Figure 1 is a front view of a steering wheel assembly incorporating the membrane switch assembly of the present invention.
Figure 2 is a rear view of a floating module portion of the steering wheel assembly of Figure 1, including the membrane switch assembly of the present invention.
Figure 3 is a top view of a first membrane layer of the membrane switch assembly.
Figure 4 is a bottom view of a second membrane layer of the membrane switch assembly, whereby the second membrane layer is flipped and superimposed over the first membrane layer to form the membrane switch assembly.
Figure 5 is a top view of the membrane switch assembly of the present invention.
Figure 6 is a cross-sectional view taken along cut line 6-6 in Figure 5.
Figure 7 is a cross-sectional view taken along cut line 7-7 in Figure 5.

### Detailed Description of the Preferred Embodiment

The objects and advantages enumerated above together with other objects, features, and advances represented by the present invention will now be presented in terms of detailed embodiments described with reference to the attached drawing figures which are intended to be representative of various possible configurations of the invention. Other embodiments and aspects of the invention are recognized as being within the grasp of those having ordinary skill in the art.

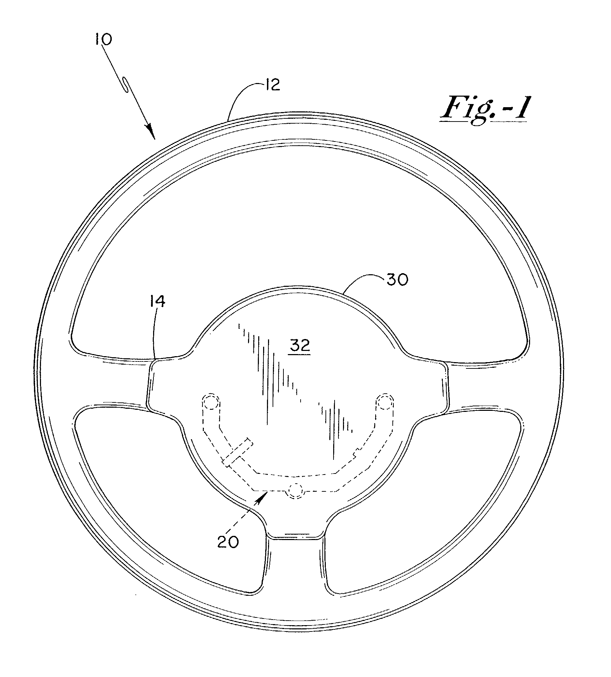

Referring now by characters of reference to the drawings, and first to Figure 1, a vehicular steering apparatus 10 is shown with electrical membrane switch assembly 20 shown in phantom behind floating module 30. As shown in Figure 1, floating module 30 is preferably configured to fit into a central hub 14 of steering wheel 12. Central hub 14 is preferably concave, and is configured to matingly receive floating module 30 therein. Steering wheel assembly 10 shown in Figure 1 is intended to be representative of a variety of steering wheel assembly configurations which incorporate a floating module to provide actuation of a remote horn. In the illustrated embodiment, inward pressure on outer surface 32 of floating module 30 acts to depress membrane switch assembly 20, such that a complete circuit is created, thereby actuating respective remote electrical devices.

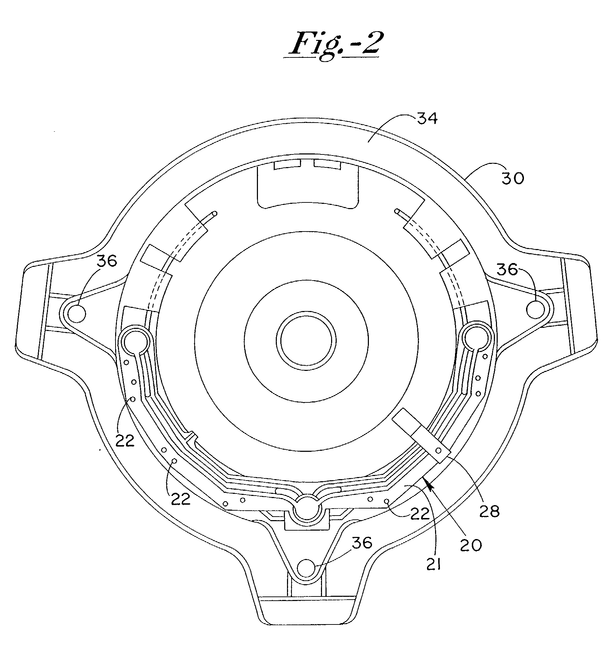

Rear side 34 of floating module 30 is illustrated in Figure 2. Floating module 30 preferably includes a plurality of spring mounts 36 with which floating module 30 is mounted to hub 14 of steering wheel 12. As further shown in Figure 2, membrane switch assembly 20 is preferably mounted to rear side 34 of floating module 30. Membrane switch assembly 20 is preferably secured to floating module 30 by inserting fasteners through fastening apertures 22. A positive contact bar 28, or other contact means such as a wire harness, may also be included to provide electrical coupling from membrane switch assembly 20 to respective remote electrical devices.

Membrane switch assembly 20 is preferably substantially u-shaped, such that membrane switch assembly 20 may be mounted along a perimeter of floating module 30. A distinct advantage obtained by the substantially u-shaped configuration of membrane switch assembly 20 is to be oriented around an inflation path of an inflatable airbag (not shown). In preferred embodiments, the inflatable airbag is positioned between outer surface 32 of floating module 30 and hub 14 of steering wheel 12. In certain vehicular impacts, the airbag automatically inflates through outer surface 32 of floating module 30. Because of such a desired inflation path, preferred steering wheel assembly embodiments of the present invention reduce and restrict the impediments between the stored airbag and outer surface 32 of floating module 30. Therefore, the configuration of membrane switch assembly 20 is particularly preferred in that the switch assembly does not impede inflation of the airbag. Further, in the event of an airbag inflation, damage to the membrane horn switch assembly is reduced or eliminated altogether due to its orientation outside the path of airbag inflation.

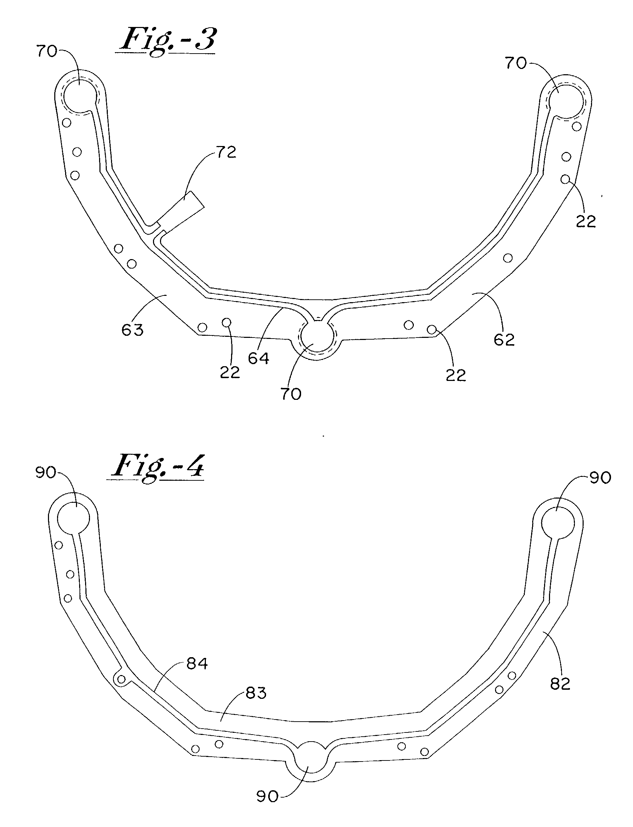

Membrane switch assembly 20 preferably comprises first and second flexible membrane layers in a generally opposing relationship to one another. Figures 3 and 4 illustrate such first and second membrane layers comprising membrane switch assembly 20. A top view of first membrane layer 62 is illustrated in Figure 3. First membrane layer 62 includes a first conductive conduit 64 disposed on upper surface 63 of first membrane layer 62. Electrically conductive conduit 64 is preferably a thin layer of electrically conductive material, such as copper, silver, aluminum, or any other malleable conductive material. Electrically conductive conduit 64 may be disposed on upper surface 63 of first membrane layer 62 in a variety of configurations, but is preferably a continuous conduit extending between distinct switch locations 70. Conductive conduit 64 preferably also extends to an electrical coupling terminal 72 for electrically coupling to electrical devices, such as remote horns.

Distinct switch locations 70 disposed on first membrane layer 62 preferably comprise areas of electrically conductive material, and may comprise a desired conductive pattern including solid and non-solid conductive patterns. Membrane switch assembly 20 may include a plurality of distinct switch locations 70, and preferably includes at least three switch locations 70. In preferred embodiments, switch locations 70 are distributed equally around membrane switch assembly 20 to provide a number of locations at which the remote horn may be actuated. As shown in Figure 3, a particular embodiment includes two switch locations 70 at opposing distal ends of membrane switch assembly 20, and a switch location 70 positioned at or near a middle portion of switch assembly 20. In other embodiments, a greater number of switch locations may be utilized to accomplish more locations at which the remote horn may be actuated. In still other embodiments, switch assembly 20 may include a single switch location 70. As further shown in Figure 3, fastening apertures 22 are provided in first membrane layer 62.

Second layer membrane layer 82 is shown in a bottom view in Figure 4. Second membrane layer 82 is substantially a mirror image configuration of first membrane layer 62, except for the conductive material pattern disposed thereon. As illustrated in Figure 4, second membrane layer 82 includes conductive material 84 disposed in a desired pattern thereon. As can be seen from Figures 3 and 4, second membrane layer 82 would cleanly superimpose over first membrane layer 62 when second membrane layer 82 is flipped and placed directly over first membrane layer 62. Switch locations 90 comprising conductive material patterns on second membrane layer 82 preferably correspond to switch locations 70 on first membrane layer 62. Most preferably, the conductive pattern at each switch location 90 corresponds to the conductive material pattern at each switch location 70, such that electrical conductivity is created between respective switch locations 70 and 90 when pressed into physical or electrical contact. For example, a conductive material pattern formed on switch location 70 preferably meshes with the corresponding conductive material pattern on switch location 90. In some embodiments, switch locations 70 and 90 both comprise solid conductive material patterns.

As discussed above, second membrane layer 82 is placed on first membrane layer 62 so as to form a unitary body with respective conductive material surfaces in face-to-face relationship with one another. Conductive material conduit 84 is preferably disposed on lower surface 83 of second membrane layer 82. Membrane switch assembly 20 is therefore created by placing surface 83 of second membrane layer 82 in face-to-face relationship with upper surface 63 of first membrane layer 62. Preferably, conductive material 84 is fabricated from a similar material as conductive material conduit 64.

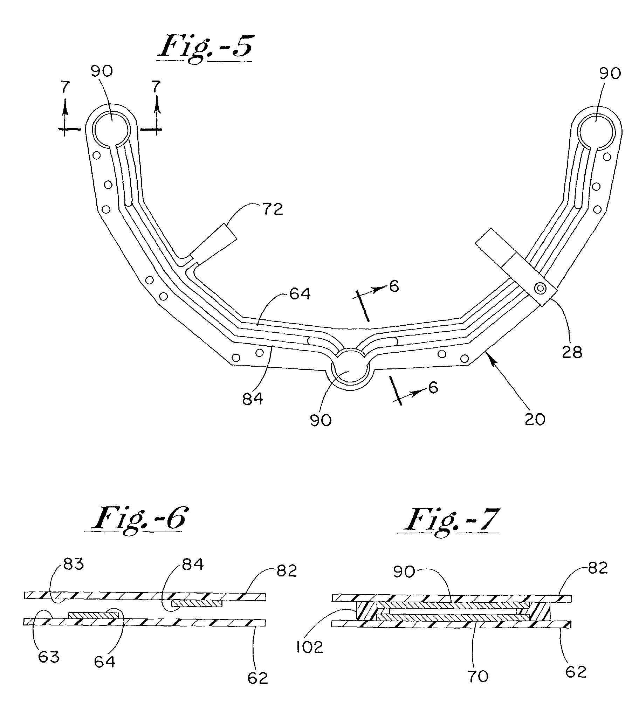

Membrane switch assembly 20 is best viewed in Figure 5, which illustrates second membrane layer 82 superimposed over first membrane layer 62. In preferred embodiments, first membrane layer 62 is heat sealed to second membrane layer 82 at or adjacent respective perimeters thereof. However, other sealing techniques such as pressure-adhesives could be used as well. As can be seen in Figure 5, conductive conduit 64 does not align with, and is not superimposed by, conductive conduit 84 of second membrane layer 82. Membrane switch assembly 20 is preferably fabricated such that a residual space is formed between respective inner portions of first membrane layer 62 and second membrane layer 82 at switch locations 70, 90. Thus, first and second membrane layers 62, 82 are preferably in permanent contact only at respective perimeter portions where a sealing operation has taken place. The residual spacing between first and second membrane layers 62, 82 allows for intermittent and temporary contact between respective conductive materials at switch locations 70, 90 upon external pressure placed thereon by a user. Conductive conduits 64, 84 are preferably misaligned such that pressure compressing first and second membrane layers 62, 82 together at locations other than the distinct switch locations does not complete the electrical circuit, and therefore does not actuate the respective remote electrical devices. Thus, the embodiment illustrated in Figure 5 includes three distinct locations at which electrical contact between conductive material on respective first and second membrane layers 62, 82 may be accomplished.

By interconnecting each of the distinct switch locations with conductive conduit 64, 84, only one of such switch locations need be compressed to establish electrical contact between the two distinct layers, thereby completing the electrical circuit and actuating the remote electrical device.

A cross-sectional view taken along cut line 6-6 is shown in Figure 6. As can be seen more clearly in Figure 6, conductive conduit 64, 84 are spaced apart and offset from one another such that compression of membrane layers 62, 82 together does not establish electrical contact between conductive conduits 64, 84. Pressure absorption means (not shown) may be disposed on one or more of respective surfaces 63, 83 for providing gas relief zones which are sized and configured for accepting trapped gas existing between membrane layers 62, 82, and forced therefrom when inward pressure is applied to a respective membrane layer 62, 82. In some embodiments, such gas relief zones may be sealed to provide a two-way gas flow, whereby gas is accepted by the relief zones upon exertion of inward pressure, and thereafter released back into disposition between membrane layers 62, 82 upon release of such inward pressure. In preferred embodiments, such pressure absorption means comprise open channels disposed in respective surfaces 63, 83.

Figure 7 represents a cross-sectional view taken from cut line 7-7 in Figure 5. As illustrated in Figure 7, switch locations 70, 90 are preferably in spaced apart and face-to-face relationship with one another. In preferred embodiments, a layer of dielectric material 102 is inserted between membrane layers 62, 82, and between portions of respective switch locations 70, 90. In doing so, dielectric layer 102 provides and maintains a degree of separation between respective switch locations 70, 90 in the absence of inward pressure upon membrane layer 82. When such an inward pressure is incurred, membrane layer 82 deflects inwardly, thereby creating electrical contact between respective switch positions 70, 90 where dielectric layer 102 is absent. Such a configuration is desired to reduce or eliminate accidental or unwanted activations of the remote horn by inadvertent compression of membrane layers 62, 82.

Dielectric layer 102 is preferably fabricated from dielectric ink or any other suitable dielectric material. In preferred embodiments, dielectric layer 102 is about 0.003 inches in thickness, which provides a desired degree of separation between switch locations 70, 90.

In addition to the advantages enumerated above which are introduced by the membrane switch assembly of the present invention, a number of distinct advantages may be realized through the utilization of the present invention. For example, by allowing manufacturers to locate the horn switch assembly at or near the perimeter of respective floating modules, steering wheel assemblies may be made in a more stylized fashion. Further, the membrane switch assembly of the present invention involves a reduced degree of interference with airbag deployment in the event of vehicular impact. Additionally, no special or distinct inserts are necessary to be placed in hub portions 14 of steering wheel 12, nor in floating module 30, as the membrane switch assembly of the present invention conveniently fits in established recesses of floating module 30. Because no special inserts are required for installation, the one-piece membrane switch assembly of the present invention may be easily assembled into the steering wheel assembly 10. As an additional advantage introduced by the present invention, the gas absorption means provide a relief zone to alleviate internal gas pressure between switch locations 70, 90 when depressed.

The membrane switch assembly of the present invention encapsulates and electrically isolates all electronic circuitry in the initial mold configuration, such that no distinct isolating elements are required. A further advantage introduced by the present invention is the increased life span of electrical surfaces such as at the switch locations. Because membrane switch assembly 20 is sealed, the electrical surfaces will not oxidize or degrade over time. In such a manner, the electrically conductive materials of switch assembly 20 will continue to properly function over a longer period of time than unsealed switch assemblies. Further, the switch assembly of the present invention does not require wetting currents for removing oxidation on electrical surfaces.

The membrane switch assembly of the present invention is contemplated to be used in a variety of electrical applications for remotely actuating and manipulating such electrical devices from a remote location such as a vehicular steering wheel. In preferred embodiments, electrically conductive conduits are provided in the membrane switch assembly to provide remote control of a plurality of electrical devices such as cruise control, radio, warning horn, and other electrical controls. Preferably, such electrical devices each contain distinct switch locations in the membrane switch assembly of the present invention. In some cases, the control provided by the membrane switch assembly are redundant controls, in that electrical control is provided both locally and remotely for the respective electrical device.

The invention has been described herein in considerable detail in order to comply with the patent statutes, and to provide those skilled in the art with the information needed to apply the novel principles and to construct and use embodiments of the invention as required. However, it is to be understood that the invention can be carried out by specifically different device and that various modifications can be accomplished without departing from the scope of the invention itself.

## Claims

1. A membrane switch assembly for use in a vehicular steering wheel apparatus for actuating a remote electrical device, said membrane switch assembly comprising:
first and second flexible membrane layers in generally opposing relationship to one another, respective adjacent and spaced apart surfaces of said first and second layers having electrically conductive material disposed thereon, said conductive material being electrically coupled to said remote horn, said conductive material on said first layer being in face-to-face and spaced apart relationship with said second layer conductive material at one or more distinct switch locations, such that sufficient inward pressure on said first and second membrane layers causes said first layer conductive material and said second layer material to come into electrical contact with one another, thereby completing a circuit between respective said conductive material layers for the duration of such inward pressure, said switch assembly being sized and configured to operably mount to a rear perimeter portion of a floating steering wheel module.

2. A membrane switch assembly as in Claim 1, including a layer of dielectric material disposed between said first and second membrane layers at portions of said switch locations.

3. A membrane switch assembly as in Claim 1 having at least three of said switch locations.

4. A membrane switch assembly as in Claim 1, including pressure absorption means disposed on respective inner surfaces of said first and second membrane layers, said pressure absorption means comprising gas relief zones which are sized and configured for accepting gas forced from between said membrane surfaces upon imposition of inward pressure on said membrane layers.

5. A membrane switch assembly as in Claim 4 wherein said gas relief zones are sealed.

6. A membrane switch assembly as in Claim 1 wherein said first and second membrane layers are configured to operably fit into a correspondingly-sized recessed portion of said floating steering wheel module in a substantially u-shaped orientation.

7. A membrane switch assembly as in Claim 1 wherein said first and second membrane layers are heat sealed to one another.

8. A membrane switch assembly as in Claim 1 wherein said first and second flexible membrane layers are manufactured as a unitary structure.

9. A membrane switch assembly as in Claim 1 wherein said conductive material is selected from one or more of copper, silver, or aluminum.

10. A membrane switch assembly as in Claim 1 wherein said conductive material substantially forms two parallel conduits in spaced-apart and offset orientation between such switch locations, and are in parallel and face-to-face relationship with one another at said switch locations.

11. A membrane switch assembly as in Claim 1 wherein said electric contact at one of said switch locations completes said circuit to actuate said remote electrical device.

12. A membrane switch assembly as in Claim 11 wherein electrical contact at particular said switch locations actuates a respective one of a plurality of said electrical devices.

13. A membrane switch assembly, comprising:
a pair of spaced-apart flexible membrane layers in generally opposing relationship with one another, each of said membrane layers having electrically conductive conduits disposed on respective inner surfaces thereof, said membrane layers being operably spaced apart by dielectric material positioned at desired intervals between said membrane layers such that said opposing electrically conductive conduits are operably and temporarily placed into electrical contact with one another through the application of inward force at specific locations of said switch assembly, thereby completing a circuit between said conductive conduits of said first and second membrane layers.

14. A membrane switch assembly as in Claim 12 wherein operable electrical contact is possible at at least three distinct locations.

15. A membrane switch assembly as in Claim 12, including pressure absorption means disposed on at least one of said membrane layers for providing gas relief zones for temporarily accepting gas forced from between said membrane layers.

16. A membrane switch assembly as in Claim 12 wherein said conductive conduits are operably coupled to a plurality of electrical devices.
